# EUROPÄISCHE PATENTSCHRIFT

(11) **EP 1 051 362 B1**
(45) Veröffentlichungstag und Bekanntmachung des Hinweises auf die Patenterteilung: **28.07.2004**
(21) Anmeldenummer: 99906218.5
(22) Anmeldetag: 04.02.1999
(51) Int. Cl.: C03C 17/00, C03C 17/38, C03C 17/36, B60R 1/06, G02B 7/18

(54) **BEHEIZBARER SPIEGEL UND VERFAHREN ZUM HERSTELLEN EINER HEIZLEITERSCHICHT SOWIE DEREN VERWENDUNG**
HEATABLE MIRROR, METHOD FOR PRODUCING A HEAT CONDUCTIVE LAYER, AND THE USE THEREOF
RETROVISEUR CHAUFFANT, PROCEDE POUR PRODUIRE UNE COUCHE THERMOCONDUCTRICE, AINSI QUE SON UTILISATION

(30) Priorität: 06.02.1998 AT 22198
(43) Veröffentlichungstag der Anmeldung: 15.11.2000
(73) Patentinhaber: Magna Auteca AG, 8160 Weiz (AT)
(72) Erfinder: MACHER, David, A-8570 Voitsberg (AT); ZORN, Heinz, A-8063 Eggersdorf (AT); STARK, Johann, A-8010 Graz (AT)
(74) Vertreter: Pfenning, Meinig & Partner
(86) Internationale Anmeldenummer: PCT/EP1999/000728
(87) Internationale Veröffentlichungsnummer: WO 1999/040039

(56) Entgegenhaltungen:
- EP-A- 0 546 365
- EP-A- 0 662 457
- DE-A- 3 615 949
- GB-A- 1 592 158
- PATENT ABSTRACTS OF JAPAN vol. 012, no. 191 (C-501), 3. Juni 1988 & JP 62 297242 A (ASAKA GLASS SANGYO KK), 24. Dezember 1987

## Beschreibung

Die Erfindung betrifft einen beheizbaren Spiegel der eine speziell ausgebildete Heizleiterschicht aus leitfähigen Partikeln aufweist, ein Verfahren zum Aufbringen von Heizleiterschichten auf Substraten und die Verwendung dieses Verfahrens zum Herstellen von beheizbaren Spiegeln.

Beheizbare Spiegel die eine Heizleiterschicht aus leitfähigem Material aufweisen sind bekannt. So ist in der US 3,686,437 ein beheizbarer Spiegel beschrieben, bei dem eine Heizleiterschicht im Vakuum oder durch Sputtern auf ein Glassubstrat aufgebracht worden ist. In diesem US-Patent wird vorgeschlagen als Heizleiterschicht eine Nickel-Chrom-Legierung zu verwenden.

Nachteilig bei diesem Spiegel ist, daß zum einen die Technologien zum Aufbringen der Heizleiterschicht sehr aufwendig sind. Wie in dem US-Patent beschrieben wird, ist ein Aufbringen der Nickel-Chrom-Legierung entweder im Vakuum oder mit einem Sputterprozeß durchzuführen. Beide Verfahrensschritte sind für eine Massenherstellung zu aufwendig und zu teuer. Des weiteren hat es sich gezeigt, daß ein derartiger Spiegel offensichtlich aufgrund der nur sehr dünnen Schichten auch eine nicht genügende Heizleistung aufweist. Dies führt dazu, daß die Zeitspanne um einen Spiegel beschlagsfrei zu erhalten, zu lange ist. Auch ist es mit derartigen Spiegeln nicht möglich, gezielt bestimmte Bereiche stärker aufzuheizen als andere, was aufgrund der Konstruktion des Spiegels in vielen Fällen erforderlich ist.

Aufgabe der vorliegenden Erfindung ist es deshalb, einen beheizbaren Spiegel vorzuschlagen, dessen Heizleiterschicht eine hohe Heizleistung und ein beliebig gestaltetes Layout der Heizleiterschicht erlaubt. Aufgabe der Erfindung ist es weiterhin, ein kostengünstiges und einfaches Verfahren für die Massenherstellung zur Verfügung zu stellen, mit dem eine Heizleiterschicht auf ein Substrat aufgebracht werden kann.

Die Aufgabe wird in bezug auf den beheizbaren Spiegel durch die Merkmale des Patentanspruches 1 und in bezug auf das Verfahren durch die Merkmale des Patentanspruches 17 gelöst. Die Unteransprüche zeigen vorteilhafte Weiterbildungen der erfindungsgemäßen Lösung auf.

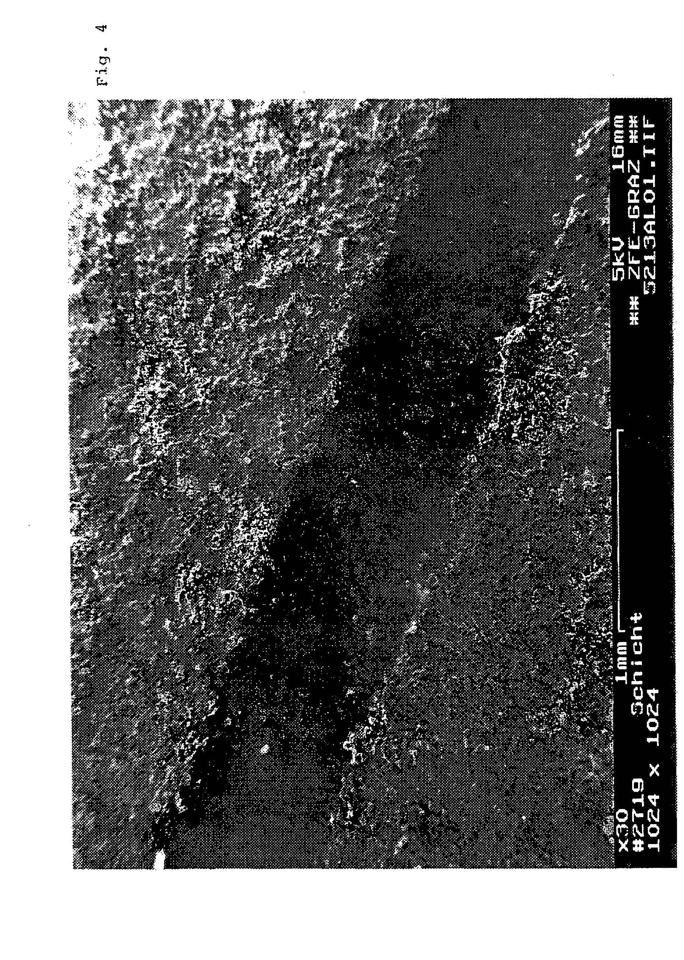

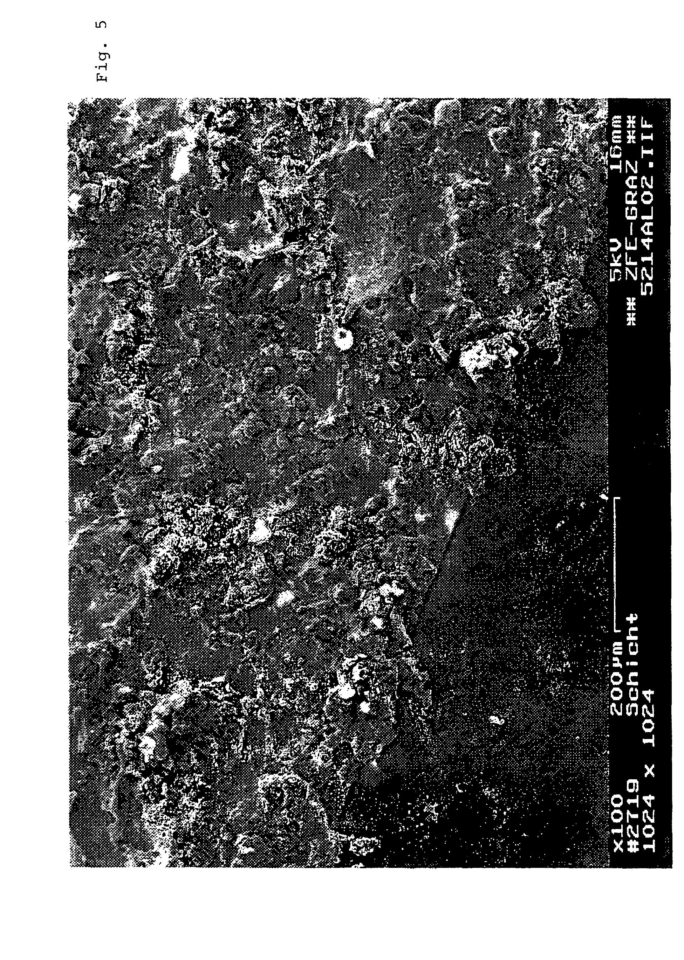

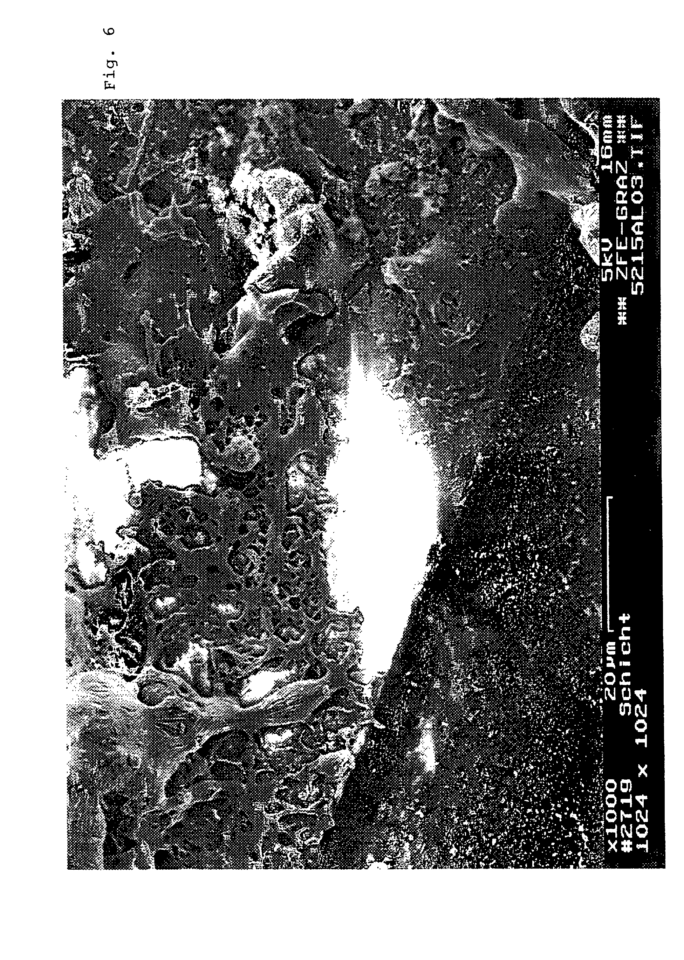

Erfindungsgemäß wird somit vorgeschlagen, daß die Heizleiterschicht durch in die Oberfläche des Substrates und/oder der Reflexionsschicht mindestens teilweise eingebetteten leitfähigen Partikel gebildet ist. Wesentlich für den erfindungsgemäßen beheizbaren Spiegel ist dabei, daß die Partikel einen mittleren Durchmesser von 3 bis 100 µm aufweisen. Die Fign. 4 bis 6 zeigen rasterelektronenmikroskopische Aufnahmen in 30, 100 und 1000facher Vergrößerung, aus denen die Partikelausbildung erkennbar ist. Die Heizleiterschicht weist demnach eine "rauhe Oberfläche" auf. Insbesondere Fig. 6 zeigt, daß die Partikel durch den Auftragungsprozeß offensichtlich nur unwesentlich verändert worden sind. Aus den Fign. 4 bis 6 ist auch zu entnehmen, daß die Partikel teilweise in die Oberfläche des Substrates, hier einem Spiegel eingedrungen sind. Die Haftung der Partikel auf dem Substrat wird somit im wesentlichen durch das Eindringen der Partikel in die Oberfläche des Substrates hergestellt. Selbstverständlich erfolgt auch teilweise eine Versinterung der Partikel untereinander und mit der Oberfläche. Wesentlich beim beheizbaren Spiegel mit der Heizleiterschicht wie vorstehend beschrieben ist, daß eine bestimmte Rauhigkeit, d.h. ein mittlerer Partikeldurchmesser von 3 bis 100 µm eingehalten wird und daß eine dadurch zusammenhängende leitfähige Schicht entsteht. Damit unterscheidet sich die Heizleiterschicht des erfindungsgemäßen Spiegels von denen, die bisher aus dem Stand der Technik bekannt sind, die üblicherweise über Sputterprozesse oder Verdampfungsverfahren aufgebracht worden sind. In allen diesen Fällen entsteht dadurch eine sehr feinteilige homogene Leiterschicht, die die eingangs geschilderten Nachteile des Standes der Technik aufweist.

Die Partikel selbst sind bevorzugt aus den Metallen Al, Zn, Sn, Cu, Ni und/oder deren Legierungen ausgewählt. Ganz besonders bevorzugt beim erfindungsgemäßen beheizbaren Spiegel ist es, wenn die Partikel aus Aluminium und/oder einer Aluminiumlegierung mit mindestens 96 % Aluminium bestehen. Eine weitere bevorzugte Ausführungsvariante des erfindungsgemäßen Spiegels ist dadurch gekennzeichnet, daß das Substrat für den beheizbaren Spiegel Glas ist. Insbesondere die Materialpaarung Glas und Aluminium und/oder Aluminiumlegierung als Partikel hat sich als besonders überlegen in seinen Eigenschaften in bezug auf die mechanische Haftung und elektrische Heizleistung erwiesen.

Beim erfindungsgemäßen Spiegel kann die Heizleiterschicht sowohl ganzflächig oder bahnförmig ausgebildet sein. Für die Ausführungsform bei der eine bahnförmige Heizleiterschicht vorliegt, ist es dabei wesentlich, daß die Bereiche zwischen den Heizleiterbahnen aus einer isolierenden Trennlage bestehen. Diese isolierende Trennlage ist bevorzugt ein dünner Film mit einer Breite von 0,2 mm bis 1 mm. Die Mindestbreite ist wichtig weil sonst beim Übersprühen eine Überbrückung eintreten kann. Die Trennlage wird aus einer Formulierung hergestellt, die Harze und Lösungsmittel enthält. Bevorzugte Harze sind hierbei Schellack, Gummiarabikum oder Kolophonium. Die isolierende Trennlage kann dabei weiterhin noch Additive, wie an und für sich aus dem Stand der Technik bekannt, enthalten. Diese Trennlage wird durch Aufstreichen, Sprühen oder Pinseln in der gewünschten Form aufgebracht.

Es hat sich weiterhin als vorteilhaft erwiesen, wenn die Schichtdicke der Heizleiterschicht im Bereich von 10 µm bis 100 µm, bevorzugt im Bereich von 40 bis 60 µm liegt. Ein besonderer Vorteil des erfindungsgemäßen beheizbaren Spiegels ist es, daß die Schichtdicke der Heizleiterschicht unterschiedlich gewählt sein kann, so daß man dann an besonders kritischen Stellen im Spiegelbereich eine erhöhte Heizleistung erhält, so daß auch dort ein Beschlagen verhindert wird. Für den Fall, daß bahnförmige Heizleiterschichten verwendet werden, betragen die Bahnbreiten der Heizleiterschicht 2 bis 20 mm. Auch die Bahnbreite der Heizleiterschicht kann entsprechend der Breite so gewählt werden, daß an besonders kritischen Stellen, an denen eine Entfeuchtung des Spiegels nur schlecht möglich ist, eine breitere Bahnbreite gewählt wird. Selbstverständlich umfaßt die Erfindung auch alle Ausführungsformen bei denen sowohl die Schichtdicke der Schicht wie auch die Bahnbreite variiert ist.

Die Heizleiterschicht des erfindungsgemäßen beheizbaren Spiegels weist außer den vorstehend beschriebenen Vorteilen noch eine wesentliche Verbesserung gegenüber dem Stand der Technik auf. Es hat sich auch für einen Fachmann in nicht vorhersehbarer Weise nämlich gezeigt, daß die Heizleiterschicht wie in Patentanspruch 1 definiert, mit einer Polymerbeschichtung versehen werden kann die als Splitterschutz, zur thermischen und elektrischen Isolation sowie auch als Klebstoff zur Fixierung des Spiegelrahmens dient.

Bisher war es nämlich im Stand der Technik üblich, einen Splitterschutz aufzubringen, der in Form von Klebefilmen oder Folien vorlag und der in einem separaten Arbeitsgang hergestellt und dann auf den Spiegel aufgeklebt werden mußte. Beim erfindungsgemäßen Spiegel ist es nun insbesondere aufgrund der durch die Partikel gebildeten Oberfläche möglich, sehr einfach eine Polymerbeschichtung z.B. durch Spritzen, aufzubringen. Es hat sich dabei als besonders vorteilhaft erwiesen, wenn als Polymerbeschichtung eine solche gewählt wird die aus einem selbsthärtenden silanmodifizierten Polymer besteht. Dadurch ist nun der Vorteil gegeben, daß in einem einfachen Arbeitsgang der Spiegel auf der Seite auf der die Heizleiterschicht aufgebracht ist, ganzflächig mit dem Polymer beschichtet wird und daß dann eine einfache Aushärtung an Luft erfolgt. Bevorzugt werden als derartige Polymere silanmodifizierte Alkydharzsysteme eingesetzt. Diese zeichnen sich besonders dadurch aus, daß sie Einkomponentensysteme sind und an Luftfeuchtigkeit zu einem weichelastischen Produkt vernetzen. Ein weiterer Vorteil einer derartigen Beschichtung ist, daß diese Beschichtung als Wasserdampfsperre wirkt sowie UV-stabil ist und als Dichtstoff mit sehr guter Glättbarkeit fungiert.

Beim erfindungsgemäßen beheizbaren Spiegel ist es, wie aus dem Stand der Technik bereits bekannt vorgesehen, daß Kontaktstellen zur Kontaktierung mit einer Spannungsquelle vorhanden sind. Diese Kontaktstellen sind dabei bevorzugt so ausgebildet, daß sie über eine zusätzliche Metallschicht mit der Heizleiterschicht verbunden sind. Diese zusätzliche Metallschicht ist bevorzugt ausgewählt aus den Metallen Zn und/oder Sn. Diese zusätzliche Metallschicht hat dabei eine Dicke von 50 bis 100 µm.

Als Reflexionsschicht für den Spiegel können die aus dem Stand der Technik bekannten Schichten eingesetzt werden. Beispiele hierfür sind dicroide Schichten oder Chrom- und Silberschichten.

Die Erfindung betrifft weiterhin ein Verfahren zum Herstellen einer Heizleiterschicht aus elektrisch leitfähigen Partikeln auf einem Substrat. Erfindungsgemäß zeichnet sich das Verfahren dadurch aus, daß das elektrisch leitfähige Material in Drahtform einer Temperaturerzeugungsvorrichtung zugeführt wird und dabei eine Temperatur von > 5000 °K ausgesetzt wird. Die dabei entstehenden leitfähigen Partikel werden in Luft auf die Substratoberfläche geführt. Wesentlich beim erfindungsgemäßen Verfahren ist dabei, daß dieses Auftragsverfahren in Umgebungsatmosphäre, d.h. in Raumluft durchgeführt wird. Dadurch ist dieses Verfahren einfach und kostengünstig im Aufbau.

Bevorzugt ist es beim erfindungsgemäßen Verfahren, daß die Temperatur mittels Lichtbogen erzeugt wird. Der Abstand zwischen der Vorrichtung und dem Substrat beträgt dabei bevorzugt 5 bis 50 cm, besonders bevorzugt 12 bis 25 cm. Besodners hervorzuheben beim erfindungsgemäßen Verfahren ist es, daß der Transport der Partikel mit Druckluft erfolgen kann. Durch diese einfache Maßnahme ist es nun möglich, auch durch eine Variation des Druckes das Verfahren zu beeinflussen.

Die Druckluft kann im Bereich von 2,8 bis 7,5 atm. variiert werden.

Das erfindungsgemäße Verfahren erlaubt es somit die Schichtdicke der aufgebrachten Partikel durch Variation des Abstandes des Substrates von der Wärmeerzeugungsvorrichtung und/oder durch Variation der Geschwindigkeit der Partikel sowie durch den Drahtvorschub und die Höhe des elektrischen Lichtbogenstroms einzustellen.

Das erfindungsgemäße Verfahren bietet weitreichende Vorteile. Erfindungsgemäß ist es für die bahnförmige Ausführungsform als ersten Verfahrensschritt eine Trennlage auf dem Substrat zu erzeugen. Diese Trennlage wird dabei so ausgebildet in ihrer Struktur, daß dann beim Auftrag die Heizleiterschicht die gewünschte Bahnform z.B. mäanderförmig oder spiralförmig erhält.

Überraschenderweise hat es sich herausgestellt, daß eine derartige isolierende Trennlage sehr einfach durch Aufbringen einer Formulierung enthaltend ein Harz und ein Lösungsmittel hergestellt werden kann. Es hat sich gezeigt, daß dann, wenn eine derartige isolierende Trennlage durch ein an und für sich gängiges Auftragsverfahren auf der Substratoberfläche aufgebracht wird, die durch das Verdampfungsverfahren dem Substrat zugeführten Partikel an den Stellen an denen die Trennlage auf dem Substrat anhaftet, ein Eindringen der Partikel in die Substratoberfläche verhindert wird. Die auftretetenden Partikel fallen somit von diesen Bereichen auf denen die Trennlage aufgebracht ist ab und haften nur, d.h. sie dringen in die Oberfläche des Substrates ein, an den Stellen an denen keine Trennlage vorhanden ist. Die Fign. 4 bis 6 zeigen nun beispielhaft an einem Glassubstrat eine aufgebrachte Aluminiumlegierung bei der auch eine Trennlage vorhanden ist. Die Fign. 4 bis 6 verdeutlichen, daß an den Stellen an denen die Trennlage aufgebracht worden ist, durch das nachträgliche Auftragsverfahren keine Anhaftung der Partikel stattgefunden hat. Im Beispielsfall der Fign. 4 bis 6 wurde als Trennlage ein Markerstift mit einer Harzformulierung und Farbstoffen verwendet.

Dadurch eröffnen sich weitreichende Möglichkeiten in bezug auf das Layout der aufzubringenden Heizleiterschicht. Mit dem erfindungsgemäßen Verfahren ist es somit nicht nur möglich, die Dicke und Bahnbreite zu variieren sondern auch das Layout der aufzubringenden Heizleiterschicht kann durch sehr einfaches Anbringen der Trennlage auf dem Substrat gezielt gesteuert werden.

Ein entscheidender Vorteil des erfindungsgemäßen Verfahrens ist es, daß auf die Heizleiterschicht ganzflächig eine Polymerbeschichtung aufgebracht werden kann die dann als Splitterschutz, zur thermischen und elektrischen Isolation sowie als Klebstoff zur Fixierung des Spiegelrahmens dient. Insbesondere durch die mit dem erfindungsgemäßen Verfahren erzeugte rauhe Oberfläche mit der vorstehend beschriebenen Partikelausbildung ist es offensichtlich möglich, daß eine Polymerbeschichtung durch ein einfaches Verfahren z.B. durch Aufrollen, Aufspachteln oder ein sonstiges gängiges Auftragsverfahren aufgebracht werden kann. Ein weiterer Vorteil ist, daß diese Polymerbeschichtung eine ausgezeichnete Haftung zum Untergrund, d.h. zur Leiterschicht und/oder zur Trennlage aufweist. Bevorzugt wird als Polymerbeschichtung ein silanmodifiziertes Polymer insbesondere ein silanmodifiziertes Alkydharz verwendet. Der Vorteil dieses Systems besteht darin, daß es an Luft selbsthärtend ist. Durch diese Maßnahme ist ein sehr einfaches und kostensparendes Aufbringen eines Splitterschutzes möglich der gleichzeitig als Isolation und ggf. als Kleber für den Spiegelrahmen dient.

In bezug auf die Materialauswahl für die aufzubringenden Partikel und für die Substrate wird auf die vorstehenden Ausführungen zum beheizbaren Spiegel verwiesen. Besonders bevorzugt ist es danach, wenn eine Materialpaarung Glas und Aluminium und/oder Aluminiumlegierung für die Partikel verwendet wird. Als isolierende Trennlage hat es sich dabei als vorteilhaft erwiesen, wenn hier ein an und für sich aus dem Stand der Technik bekannter Markerstift z.B. Eddingmarker® verwendet wird.

Aufgrund der ausgezeichneten Steuerungsmöglichkeiten des Verfahrens in bezug auf die Schichtdicke, Bahnbreite und das Layout eignet sich das vorstehend näher beschriebene erfindungsgemäße Verfahren besonders zur Erzeugung von Heizleiterschichten für beheizbare Spiegel in der Kraftfahrzeugindustrie wie in den Ansprüchen 1 bis 16 beschrieben.

Die Erfindung wird nachfolgend anhand der Figuren 1 bis 7 näher beschrieben.

Es zeigen:
- Fig. 1: ein Spiegel mit einem erfindungsgemäß ausgebildeten Heizleiterschicht;
- Fig. 2: der Spiegel, geschnitten gemäß den Linien II - II in Fig. 1;
- Fig. 3: einen Teilbereich des erfindungsgemäßen Spiegels mit einem Feuchtigkeitssensor und schematisch dargestellter Energieversorgungs- und Regeleinrichtung;
- Fig. 4: eine elektronenmikroskopische Aufnahme in 30facher Vergrößerung einer erfindungsgemäßen Heizleiterschicht;
- Fig. 5: dieselbe Heizleiterschicht in 100facher Vergrößerung;
- Fig. 6: die Heizleiterschicht in 1000facher Vergrößerung.

Einführend sei festgehalten, daß in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

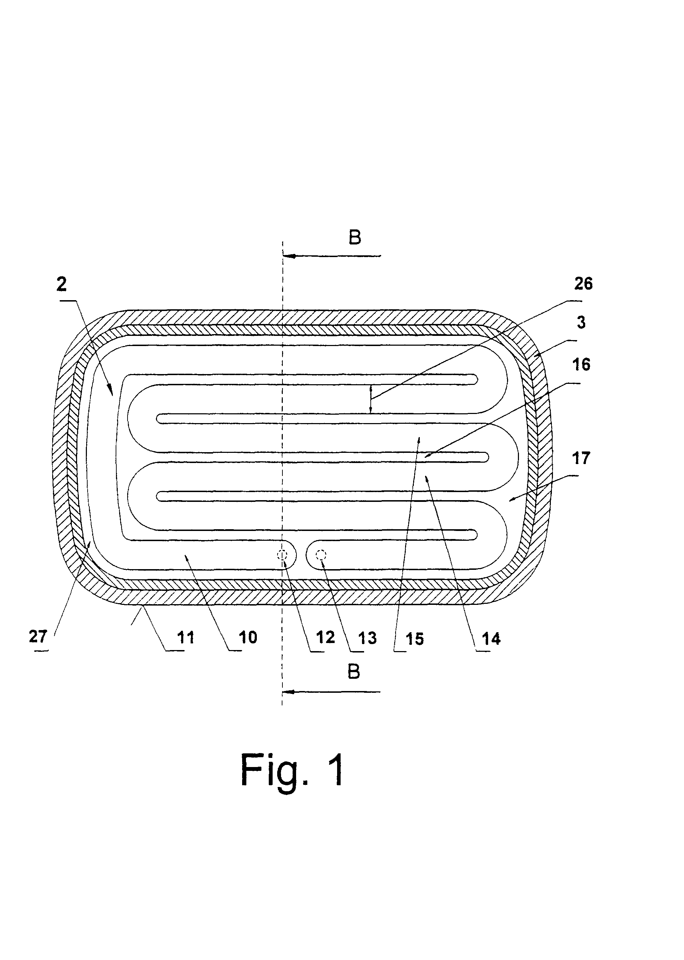

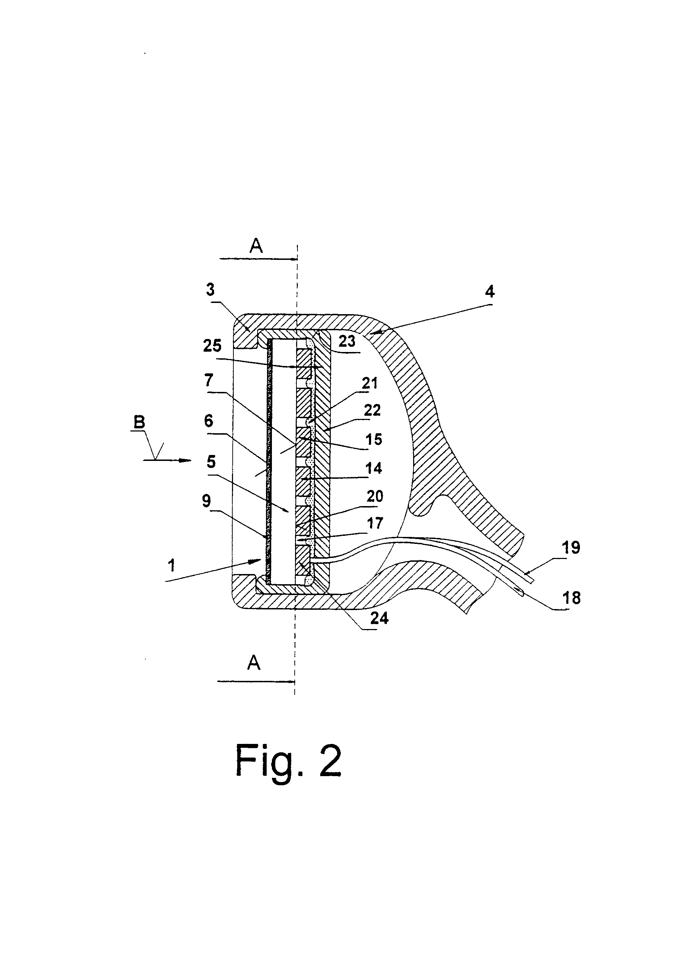

In den gemeinsam beschriebenen Fign. 1 bis 3 ist ein beheizbarer Spiegel 1 mit einem Heizelement 2 in einem Gehäuse 3 für einen Außenspiegel 4, z.B. für Kraftfahrzeuge, gezeigt. Er besteht aus einem Substrat 5 aus einem eine geringe Wärmeleitfähigkeit aufweisenden, anorganischen Material, z.B. Glas, Keramik, bevorzugt mit geschliffenen und vergüteten Oberflächen 6, 7. Beispielsweise auf der einer Blickrichtung gemäß - Pfeil 8 - entgegengesetzten Oberfläche 7 ist das Substrat 5 mit einer Reflexionsschicht 9, z.B. einer Chromschicht, beschichtet.

Das Heizelement 2, mit einer zumindest auf einer Oberfläche 6, 7 des Substrates 5 und/oder der Reflexionsschicht 9 aufgebrachten Schicht aus elektrisch leitendem und der Stromführung einen Widerstand entgegensetzenden Material bildet im wesentlichen eine Leiterbahn 10 aus, wobei das elektrisch leitende Material bahnförmig oder vollflächig auf der Oberfläche 6, 7 angeordnet ist. Der bahnförmige Verlauf der Leiterbahn 10 ist spiral- oder mäanderförmig, die Oberfläche 7 vorzugsweise großflächig bedeckend ausgebildet, wobei ein unterbrechungsfreier Verlauf der Leiterbahn 10 von einer in etwa im Mittel einer Längsstirnkante 11 befindlichen Endstelle bis zu einer unmittelbar dazu benachbart angeordneten weiteren Endstelle gegeben ist. Es ist jedoch auch möglich, die Leiterbahn 10 als vollflächige Heizschicht auszubilden. In den Endstellen der Leiterbahn 10 sind Kontaktelemente 12, 13 angeordnet.

Unmittelbar benachbart zueinander verlaufende Leiterbahnbereiche 14, 15 sind mittels einer einen Zwischenraum 16 zwischen den Leiterbahnbereichen 14, 15 ausbildenden Trennlage 17 voneinander elektrisch isoliert, welche auf der Oberfläche 6, 7 des Substrates 5 angeordnet ist. Die Kontaktelemente 12, 13, von denen Leitungen 18, 19 für die elektrische Anspeisung der Leiterbahn 10 durch das Gehäuse 3 durchgeführt sind, werden durch direkte Verlötung mit dem Material der Leiterbahn 10 elektrisch leitend angeschlossen und bestehen aus einer auf die Leiterbahn 10 aufgebrachten Zink- und/oder Zinnschicht.

Das Heizelement 2 ist auf einer vom Substrat 5 abgewandten Rückfläche 20 mit einer Deckschicht 21 aus einem elektrisch nicht leitenden Material versehen, so daß die Leiterbahn 10 zwischen Substrat 5 und der Deckschicht 21 angeordnet ist. Die Deckschicht 21 ist dabei bevorzugt durch eine selbsthärtende Polymerbeschichtung z.B. aus silanmodifizierten Polymeren gebildet. Mit der Deckschicht 21 ist der Spiegel 1 in den Spiegelrahmen 22 eingeklebt und wird durch die Halterung 23 im Gehäuse 3 gehalten.

Die zwischen Trennlage 17 verlaufende Leiterbahn 10 ist durch mittels Lichtbogenverfahren auf die Oberfläche 7 haftend aufgebrachte Partikel 24 aus elektrisch leitendem Material gebildet. Vorzugsweise werden Partikel 24 aus Al, Zn, Sn, Cu, Ni und/oder deren Legierungen herangezogen, wobei die Leiterbahn 10 für die Umsetzung der Stromenergie in Wärmeenergie bei Anspeisung aus einem Niederspannungsnetz einen vorgegebenen Widerstandswert von in etwa 2 Ω bis 20 Ω, vorzugsweise 8 Ω aufweist. Dadurch beträgt die Temperatur der mit Strom beaufschlagten Leiterbahn 10 maximal 100 °C. Das elektrisch leitende Material bzw. die Leiterbahn 10 kann jedoch auch transparent, beispielsweise als Hartglasbeschichtung ausgebildet sein, welche bevorzugt an einer der Blickrichtung - Pfeil 8 - zugewandten Vorderseite des Substrates 5, insbesondere an einer einer Blickrichtung - Pfeil 8 - zugesandten Vorderseite des beheizbaren Spiegels 1, angeordnet ist.

Zur Erzielung unterschiedlicher Temperaturzonen verteilt über das Substrat 5 ist das Heizelement 2 mit einer sich kontinuierlich verändernden Schichtdicke 25 versehen, womit bei einer vorgegebenen Bahnbreite 26 der Leitungsquerschnitt und damit der der Stromleitung entgegengesetzte Leitungswiderstand nach den Erfordernissen für die Heizleistung in unterschiedlichen Zonen des Spiegels 1 angepaßt werden kann.

Durch die erfindungsgemäße Ausbildung des Heizelementes 2 mit kontinuierlich veränderter Schichtdicke 25 der Leiterbahn 10 werden aber auch Temperaturspannungen zwischen benachbarten Bereichen im Substrat 5 wirkungsvoll verhindert, wodurch es möglich ist, sehr dünnwandige Substrate 5 zu verwenden, ohne daß Spannungsbrüche auftreten und wird in weiterer Folge durch die geringe zu beheizende Masse eine Reduzierung des Energieeinsatzes sowie kürzere Ansprechzeiten erreicht.

Selbstverständlich kann der erfindungsgemäße Spiegel 1 nicht nur beim dargestellten Außenspiegel 4 eingesetzt werden sondern auch bei allen heute üblichen Außenspiegeln, wie z.B. bei elektrisch verstellbaren Außenspiegeln.

Es ist auch möglich, das mit dem Heizelement 2 ausgestattete Spiegel 1 mit einem oder mehreren Sensoren, beispielsweise Temperatursensoren 28 oder Feuchtigkeitssensoren 29 zu kombinieren, welche auf der Oberfläche 7 oder auf einer der Leiterbahn 10 entgegengesetzten Oberfläche 6 eines vorzugsweise durch das Substrat 5 und gegebenenfalls die Reflexionsschicht 9 gebildeten Flächenelementes angeordnet sein können.

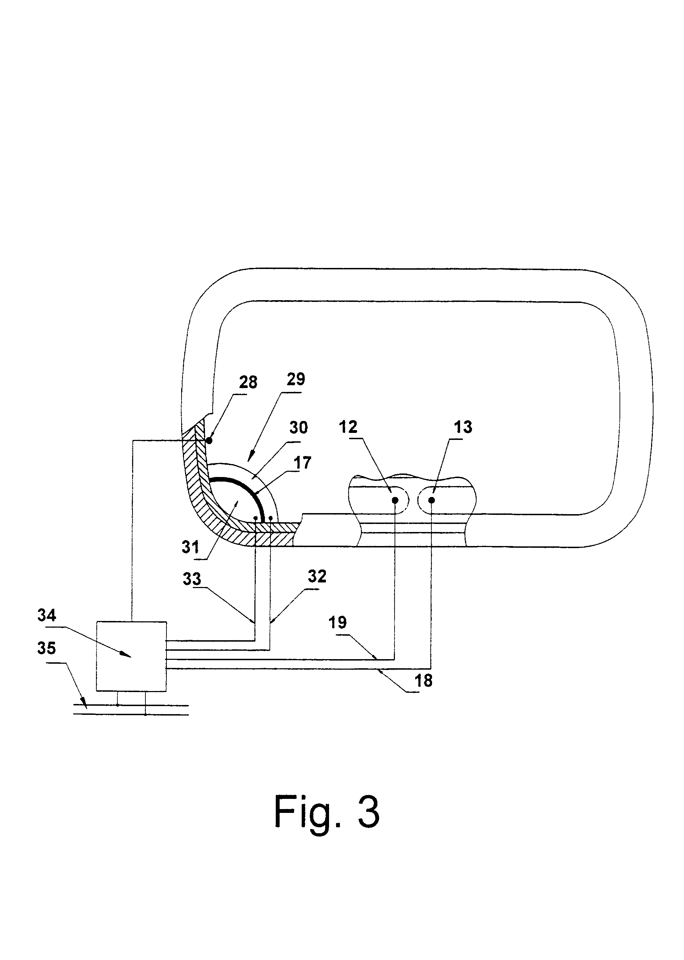

Eine mögliche Ausbildung des Feuchtigkeitssensors 29 besteht z.B. in der Ausbildung eines resistiven Meßbereiches, wie in Fig. 3 dargestellt. Der Sensor kann durch einen von der Leiterbahn 10, insbesondere von der Heizschicht isoliert angeordneten Teilbereich des elektrisch leitenden Materials gebildet sein. Es können aber auch in einem Randbereich 27 des Spiegels 1 bzw. im Bereich einer Längsstirnkante 11 des Substrates 5 auf der Oberfläche 6 oder 7 elektrisch leitende Kontaktflächen 30, 31 z.B. durch eine Chrombeschichtung aufgebracht werden, die voneinander z.B. durch die Trennlage 17 isoliert sind. Über Leitungen 32, 33 wird an die Kontaktflächen 30, 31 ein elektrische Spannung angelegt. Bildet sich auf der Oberfläche 6 Feuchtigkeit, wie es beim Beschlagen oder Vereisen eintritt, kommt es durch Überbrückung der Trennlage 17 zu einem Stromschluß und kann das daraus abgeleitete Signal für die Aktivierung des Heizelementes 2 in einer entsprechenden Versorgungs- und/oder Steuervorrichtung 34 als Schaltsignal Verwendung finden.

## Patentansprüche

1. Beheizbarer Spiegel mit einem transparenten Flächenelement aus einem Substrat aus anorganischem Material und mindestens einer Reflexionsschicht sowie mindestens einer auf dem Subscrat und/oder der Reflexionsschicht aufgebrachten Heizleiterschicht die Kontaktelemente aufweist,
**dadurch gekennzeichnet,**
**daß** die Heizleirerschicht (10) durch in die Oberfläche des Substrates (5) und/oder der Reflexionsschicht (9) mindestens teilweise eingebetteten leitfähigen Partikel mit einem mittleren Durchmesser von 3 bis 100 µm gebildet ist, die aus den Metallen Al, Zn, Sn, Cu oder Ni und/oder deren Legierung ausgewählt sind und daß die Heizleiterschicht (10) ganzflächig oder bahnförmig ausgebildet ist wobei der nichtäeitende Bereich bei der bahnförmigen Ausführungsform zwischen den Bahnen eine isolierende Trennlage (17) ist.

2. Beheizbarer Spiegel nach Anspruch 1, **dadurch gekennzeichnet, daß** ganzflächig auf der Heizleizerschicht (10) eine Polymerbeschichtung als Deckschicht (21) die als Splitterschutz, und Isolation dient, aufgebracht ist.

3. Beheizbarer Spiegel nach Anspruch 1 oder 2, **dadurch gekennzeichnet, daß** die Polymerbeschichtung ein silanmodifiziertes an Luft härtendes Polymer, ist.

4. Beheizbarer Spiegel nach mindestens einem der Ansprüche 1 bis 3, **dadurch gekennzeichnet, daß** die Kontaktelemente (12, 13) über eine Metallschichz mit der Heizleiterschicht (10) verbunden sind.

5. Beheizbarer Spiegel nach Anspruch 1, **dadurch gekennzeichnet, daß** die Partikel Aluminium und/oder eine Aluminiumlegierung mit mindestens 96% Aluminium sind.

6. Beheizbarer Spiegel nach mindestens einem der Ansprüche 1 bis 5, **dadurch gekennzeichnet, daß** das Substrat (5) Glas ist.

7. Beheizbarer Spiegel nach mindestens einem der Ansprüche 1 bis 6, **dadurch gekennzeichnet, daß** die isolierende Trennlage (17) ein Film ist der aus einer Harz, Lösungsmittel und ggf. Additiven enthaltenden Formulierung gebildet worden ist.

8. Beheizbarer Spiegel nach Anspruch 7, **dadurch gekennzeichnet, daß** das Harz ein Naturharz wie Schellack, Gummiarabikum, oder Kolophonium ist.

9. Beheizbarer Spiegel nach Anspruch 7 oder 8, **dadurch gekennzeichnet, daß** die Additive Farbstoffe sind.

10. Beheizbare Spiegel nach mindestens einem der Ansprüche 1 bis 9, **dadurch gekennzeichnet, daß** die Schichcdicke (25) der Heizleiterschicht (10) im Bereich von 10 bis 100 µm liegt.

11. Beheizbarer Spiegel nach mindestens einem der Ansprüche 1 bis 10, **dadurch gekennzeichnet, daß** die Metallschicht für die Kontaktstellen ausgewählt ist aus Zn, Sn, und/oder Ag.

12. Beheizbarer Spiegel nach mindestens einem der Ansprüche 1 bis 11, **dadurch gekennzeichnet, daß** die Heizleiterschicht (10) spiralförmig oder mäanderförmig ist.

13. Beheizbarer Spiegel nach Anspruch 12, **dadurch gekennzeichnet, daß** die Schichtdicke und/oder Breite der Bahnform der Heizleiterschicht (10) in Abhängigkeit von der gewünschten Heizleistung auf dem jeweiligen Flächenelement ausgewählt ist.

14. Beheizbarer Spiegel nach Anspruch 13, **dadurch gekennzeichnet, daß** die Breite der Bahnform (26) der Heizleiterbahn im Bereich von 2 bis 20 mm liegt.

15. Beheizbarer Spiegel nach mindestens einem der Ansprüche 1 bis 14, **dadurch gekennzeichnet, daß** auf der Oberfläche und/oder einer der Leiterbahnen (10) entgegengesetzte Oberfläche des Flächenelementes eine auf einer Versorgungs- und/oder Steuervorrichtung (34) leitungsverbundener Sensor wie z.B. ein Feuchtigkeits- und/oder ein Temperatursensor (28, 29) angeordnet ist.

16. Verfahren zum Herstellen einer Heizleiterschicht aus elektrisch leitfähigen Partikel auf einem Substrat, **dadurch gekennzeichnet, daß** das elektrisch leitfähige Material in Drahtform, das aus den Metallen Al, Zn, Ni, Sn, Cu und/oder deren Legierungen ausgewählt ist, einer Wärmeerzeugungsvorrichtung zugeführt und dabei einer Temperatur > 5000 °K ausgesetzt wird und die erzeugten Partikel in Luft bei Umgebungsatmosphare auf die Substratoberfläche geführt werden.

17. Verfahren nach Anspruch 16 **dadurch gekennzeichnet, daß** die Temperatur mittels Lichtbogen erzeugt wird und der Abstand zwischen der Vorrichtung und dem Substrat im Bereich von 5 bis 50, bevorzugt zwischen 12 und 25 cm liegt.

18. Verfahren nach Anspruch 16 oder 17 **dadurch gekennzeichnet**, (daß der Transport der Partikel mittels Druckluft im Bereich von 2,8 bis 7,5 atm. erfolgt.

19. Verfahren nach mindestens einem der Ansprüche 16 bis 18, **dadurch gekennzeichnet, daß** die Schichtdicke der aufgebrachten Partikel durch Variation des Abstandes des Substrates von der Temperaturerzeugungsvorrichtung und/oder durch Variation der Druckluft der Partikel und/oder durch die Vorschubgeschwindigkeit des Drahtes zur Temperaturezeugungsvcrrichtung eingestellt wird.

20. Verfahren nach mindestens einem der Ansprüche 16 bis 19, **dadurch gekennzeichnet, daß** vor dem Aufbringen der Heizleiterschicht bereichsweise auf dem Substrat eine isolierende Trennlage aufgebracht wird, die ein Eindringen der auftreffenden Partikel auf der Substratoberfläche verhindern.

21. Verfahren nach Anspruch 20, **dadurch gekennzeichnet, daß** die isolierende Trennlage in einer Form aufgebracht wird, so daß eine bahnförmige, insbesondere eine mäander- oder spiralförmige Heizleiterschicht entsteht.

22. Verfahren nach mindestens einem der Ansprüche 16 bis 21, **dadurch gekennzeichnet, daß** ganzflächig auf die Heizleiterschich eine Deckschicht in Form einer Polymerbeschichtung als Splitterschutz und zur Isolation aufgebracht wird.

23. Verfahren nach Anspruch 22, **dadurch gekennzeichnet, daß** die Polymerbeschichtung aufgestrichen oder aufgerollt wird und aus einem selbsthärtenden silanmodifizierten Polymer besteht.

24. Verfahren nach mindestens einem der Ansprüche 16 bis 25, **dadurch gekennzeichnet, daß** das Substrat Glas ist.

25. Verfahren nach mindestens einem der Ansprüche 16 bis 24, **dadurch gekennzeichnet, daß** die isolierende Trennlage aus einer Harz enthaltenden Formulierung gebildet wird.

26. Verwendung des Verfahrens nach mindestens einem der Ansprüche 16 bis 25, **dadurch gekennzeichnet, daß** die Heizleiterschicht als Spiegelheizung, insbesondere für Kraftfahrzeugspiegel verwendet wird.

## Claims

1. Heatable mirror having a transparent surface element made from a substrate of inorganic material and at least one reflective layer as well as at least one heat-conducting layer applied to the substrate and/or the reflective layer and which has contact elements, **characterised in that** the heat-conducting layer (10) is formed by conductive particles having an average diameter of 3 to 100 µm at least partially embedded in the surface of the substrate (5) and/or the reflective layer (9), the particles being selected from the metals Al, Zn, Sn, Cu, Ni and/or alloy thereof, and **in that** the heat-conducting layer (10) is designed to be over the entire surface or strip-like, wherein the non-conductive region for the strip-like embodiment is an insulating separating layer (17) between the strips.

2. Heatable mirror according to claim 1, **characterised in that** a polymer coating is applied to the entire surface of the heat-conducting layer (10) as a covering layer (21), which serves as chip protection and insulation.

3. Heatable mirror according to claim 1 or 2, **characterised in that** the polymer coating is a silane-modified polymer which cures in air.

4. Heatable mirror according to at least one of claims 1 to 3, **characterised in that** the contact elements (12, 13) are connected to the heat-conducting layer (10) via a metal layer.

5. Heatable mirror according to claim 1, **characterised in that** the particles are aluminium and/or an aluminium alloy having at least 96 % aluminium.

6. Heatable mirror according to at least one of claims 1 to 5, **characterised in that** the substrate (5) is glass.

7. Heatable mirror according to at least one of claims 1 to 6, **characterised in that** the insulating separating layer (17) is a film which has been formed from a formulation containing resin, solvent and optionally additives.

8. Heatable mirror according to claim 7, **characterised in that** the resin is a natural resin, such as shellac, gum arabic, or colophony.

9. Heatable mirror according to claim 7 or 8, **characterised in that** the additives are dyestuffs.

10. Heatable mirror according to at least one of claims 1 to 9, **characterised in that** the layer thickness (25) of the heat-conducting layer (10) lies in the range from 10 to 100 µm.

11. Heatable mirror according to at least one of claims 1 to 10, **characterised in that** the metal layer for the contact points is selected from Zn, Sn and/or Ag.

12. Heatable mirror according to at least one of claims 1 to 11, **characterised in that** the heat-conducting layer (10) is helical or meandering.

13. Heatable mirror according to claim 12, **characterised in that** the layer thickness and/or width of the strip shape of the heat-conducting layer (10) is selected as a function of the required heat capacity on the particular surface element.

14. Heatable mirror according to claim 13, **characterised in that** the width of the strip shape (26) of the heat-conducting strip lies in the range from 2 to 20 mm.

15. Heatable mirror according to at least one of claims 1 to 14, **characterised in that** a sensor, such as for example a moisture and/or a heat sensor (28, 29) connected by lead to a supply and/or control device (34) is arranged on the surface and/or a surface of the surface element opposite the conducting strips (10).

16. Process for producing a heat-conducting layer made from electrically conductive particles on a substrate, **characterised in that** the electrically conductive material being selected from the metals Al, Zn, Ni, Sn, Cu and/or alloys thereof, is supplied to a heat-producing device in wire form and thus exposed to a temperature > 5,000°K, and the particles produced are conveyed in air onto the substrate surface. at ambient atmosphere.

17. Process according to claim 16, **characterised in that** the heat is produced by means of electric arc and the distance between the device and the substrate lies in the range from 5 to 50, preferably between 12 and 25 cm.

18. Process according to claim 16 or 17, **characterised in that** the particles are transported by means of compressed air in the range from 2.8 to 7.5 atmospheres.

19. Process according to at least one of claims 16 to 18, **characterised in that** the layer thickness of the particles applied is adjusted by varying the distance of the substrate from the heat-producing device and/or by varying the compressed air for the particles and/or by the feed rate of the wire to the heat-producing device.

20. Process according to at least one of claims 16 to 19, **characterised in that** before applying the heat-conducting layer to some regions of the substrate, an insulating separating layer is applied which prevents penetration of the particles landing on the substrate surface.

21. Process according to claim 20, **characterised in that** the insulating separating layer is applied in a form, so that a strip-like, in particular meandering or helical heat-conducting layer is produced.

22. Process according to at least one of claims 16 to 21, **characterised in that** a covering layer in the form of a polymer coating is applied over the entire surface of the heat-conducting layer as chip protection and for insulation.

23. Process according to claim 22, **characterised in that** the polymer coating is spread-on or rolled-on and consists of a self-curing silane-modified polymer.

24. Process according to at least one of claims 16 to 23, **characterised in that** the substrate is glass.

25. Process according to at least one of claims 16 to 24, **characterised in that** the insulating separating layer is formed from a formulation containing resin.

26. Use of the process according to at least one of claims 16 to 25, **characterised in that** the heat-conducting layer is used as mirror heating, in particular for motor vehicle mirrors.

## Revendications

1. Rétroviseur chauffant, comportant un élément de surface transparent, constitué par un substrat formé d'un matériau minéral et par au moins une couche réfléchissante, et par une couche conductrice thermoconductrice, qui est disposée sur le substrat et/ou sur la couche réfléchissante et comporte les éléments de contact, **caractérisé en ce que** la couche thermoconductrice (10) est formé par des particules conductrices au moins partiellement insérées dans la surface du substrat (5) et/ou de la couche réfléchissante (8) comportant un diamètre moyen de 3 à 100 µm et qui sont choisies parmi les métaux Al, Zn, Sn, Cu ou Ni et/ou leur alliage, et que la couche thermoconductrice (10) est agencée de manière à s'étendre sur une surface complète ou bien sous la forme de bandes, alors que, dans le cas de la forme de réalisation en forme de bandes, la zone non conductrice entre les bandes est une couche de séparation isolante (17).

2. Rétroviseur chauffant selon la revendication 1, **caractérisé en ce qu'**un revêtement polymère est disposé en tant que couche de revêtement (21), qui est utilisé pour la protection contre la projection d'éclats et pour l'isolation, est disposé sur toute la surface de la couche thermoconductrice (10).

3. Rétroviseur chauffant selon la revendication 1 ou 2, **caractérisé en ce que** le revêtement polymère est un polymère modifié par du silane et qui durcit à l'air.

4. Rétroviseur chauffant selon au moins l'une des revendications 1 à 3, **caractérisé en ce que** les éléments de contact (12, 13) sont reliés par l'intermédiaire d'une couche métallique à la couche thermoconductrice (10).

5. Rétroviseur chauffant selon la revendication 1, **caractérisé en ce que** les particules sont constituées d'aluminium et/ou d'un alliage d'aluminium comprenant au moins 96 % d'aluminium.

6. Rétroviseur chauffant selon au moins l'une des revendications 1 à 5, **caractérisé en ce que** le substrat (5) est du verre.

7. Rétroviseur chauffant selon au moins l'une des revendications 1 à 6, **caractérisé en ce que** la couche de séparation isolante (17) est un film, qui a été formé à partir d'une formulation contenant une résine, un solvant et éventuellement des additifs.

8. Rétroviseur chauffant selon la revendication 7, **caractérisé en ce que** la résine est une résine naturelle telle qu'une gomme-laque, de la gomme arabique ou du colophane.

9. Rétroviseur chauffant selon la revendication 7 ou 8, **caractérisé** en les additifs sont des colorants.

10. Rétroviseur chauffant selon au moins l'une des revendications 1 à 9, **caractérisé en ce que** l'épaisseur (25) de la couche thermoconductrice (10) se situe dans la gamme de 10 à 100 µm.

11. Rétroviseur chauffant selon au moins l'une des revendications 1 à 10, **caractérisé en ce que** la couche métallique pour les plaques de contact est formée d'un matériau choisi parmi Zn, Sn et/ou Ag.

12. Rétroviseur chauffant selon au moins l'une des revendications 1 à 11, **caractérisé en ce que** la couche thermoconductrice (10) est disposée avec une forme spiralée ou sinueuse.

13. Rétroviseur chauffant selon la revendication 12, **caractérisé en ce que** l'épaisseur de couche et/ou la largeur de la forme de bande de la couche thermoconductrice (10) est choisie en fonction de la puissance de chauffage désirée sur l'élément de surface respectif.

14. Rétroviseur chauffant selon la revendication 13, **caractérisé en ce que** la largeur de la forme (26) de la bande thermoconductrice se situe dans la gamme de 2 à 20 mm.

15. Rétroviseur chauffant selon au moins l'une des revendications 1 à 14, **caractérisé en ce que** sur la surface et/ou sur une surface, opposée aux voies conductrices (10) de l'élément de surface est disposé un capteur relié par une ligne à un dispositif d'alimentation et/ou à un dispositif de commande (34), comme par exemple un capteur d'humidité et/ou un capteur de température (28, 29).

16. Procédé pour fabriquer une couche thermoconductrice formée par des particules électriquement conductrices sur un substrat, **caractérisé en ce qu'**on envoie le matériau électriquement conducteur sous la forme d'un fil, qui est réalisé en un matériau choisi parmi les métaux Al, Zn, Ni, Sn, Cu et/ou leurs alliages, à un dispositif de production de chaleur et est soumis à une température > 5000°K et les particules produites dans l'air sont envoyées, dans l'atmosphère ambiante, à la surface du substrat.

17. Procédé selon la revendication 16, **caractérisé en ce que** la température est produite au moyen d'un arc électrique et que la distance entre le dispositif et le substrat se situe dans la gamme de 5 à 50 cm, de préférence entre 12 et 25 cm.

18. Procédé selon la revendication 16 ou 17, **caractérisé en ce que** le transport des particules s'effectue à l'aide d'air comprimé dans la gamme de 2,8 à 7,5 atm.

19. Procédé selon au moins l'une des revendications 16 à 18, **caractérisé en ce qu'**on règle l'épaisseur de couche des particules déposées en modifiant la distance du substrat par rapport au dispositif de production de température et/ou par modification de la pression de l'air comprimé des particules et/ou en modifiant et/ou en utilisant la vitesse d'avance du fil en direction du dispositif de production de température.

20. Procédé selon au moins l'une des revendications 16 à 19, **caractérisé en ce qu'**avant le dépôt de la couche thermoconductrice, on dépose par endroits sur le substrat une couche de séparation isolante, qui empêche une pénétration des particules incidentes sur la surface du substrat.

21. Procédé selon la revendication 20, **caractérisé en ce que** la couche de séparation isolante est déposée sous une forme telle qu'il apparaît une couche thermoconductrice sous forme de bande, notamment une couche thermoconductrice de forme sinueuse ou spiralée.

22. Procédé selon au moins l'une des revendications 16 à 21, **caractérisé en ce qu'**on dépose sur toute la surface de la couche thermoconductrice une couche de revêtement sous la forme d'un revêtement polymère en tant que dispositif de protection contre la projection d'éclats ou à des fins d'isolation.

23. Procédé selon la revendication 22, **caractérisé en ce qu'**on applique par étalement ou roulage le revêtement polymère et que ce dernier est constitué par un polymère autodurcissant modifié par du silane.

24. Procédé selon au moins l'une des revendications 16 à 25, **caractérisé en ce que** le substrat est du verre.

25. Procédé selon au moins l'une des revendications 16 à 24, **caractérisé en ce que** la couche de séparation isolante est formée à partir d'une formulation contenant une résine.

26. Utilisation du procédé selon au moins l'une des revendications 16 à 25, **caractérisée en ce que** la couche thermoconductrice est utilisée en tant que système de chauffage de rétroviseur, notamment pour un rétroviseur de véhicule automobile.
